# DEMANDE DE BREVET EUROPEEN

(11) **EP 1 329 924 A1**
(43) Date de publication de la demande: **23.07.2003**
(21) Numéro de dépôt: 02293191.9
(22) Date de dépôt: 20.12.2002
(51) Int. Cl.: H01H 85/20, B60R 21/02

(54) **Dispostif de montage d'une boîte à fusibles dans un véhicule automobile**

(30) Priorité: 31.12.2001 FR 0117075
(71) Demandeur: Renault s.a.s., 92100 Boulogne Billancourt (FR)
(72) Inventeur: Pruvot, Hervé, 78170 La Celle Saint CLoud (FR)

(57) **Abrégé**

Le véhicule comprend une traverse (9) de renforcement de sa structure, passant sous la planche de bord (4) du véhicule. Le dispositif comprend des moyens de montage (16) de la boîte (10) à fusibles sur la traverse (9).

## Description

La présente invention est relative à un dispositif de montage d'une boîte à fusibles dans un véhicule automobile et, plus particulièrement, à un tel dispositif conçu pour un véhicule équipé d'une traverse de renforcement de sa structure, passant sous la partie haute de la planche de bord du véhicule.

Dans un véhicule automobile les fusibles et/ou éventuellement, des relais électriques ou électroniques de commande d'organes du véhicule, sont réunis dans une boîte fixée dans une position basse du poste de conduite, souvent au niveau des genoux du conducteur. La présence de la boîte à fusibles à ce niveau présente un double inconvénient. D'une part elle rend son accès malcommode et, d'autre part, elle exige la présence de moyens de support de la boîte qui renforce localement la rigidité de la structure du véhicule, au détriment de l'intégrité des genoux du conducteur en cas de choc de ceux-ci avec ces moyens de support.

Pour pallier ces inconvénients on a proposé d'installer la boîte à fusibles dans des positions plus hautes, dans la planche de bord du véhicule, comme décrit dans la demande de brevet anglais N° 2.280.156, voire dans une boîte à gants comme décrit dans la demande de brevet allemand N° 38 33 499. Ces solutions exigent cependant des aménagements relativement coûteux de la planche de bord.

Il demeure donc un besoin pour un dispositif peu coûteux de montage, dans un véhicule automobile, d'une boîte contenant des fusibles et, éventuellement, des relais électriques ou électroniques, dans une position commode et sûre pour le conducteur, ce dispositif présentant, outre l'avantage d'être peu coûteux, celui de permettre une installation aisée de la boîte pendant la construction du véhicule.

La présente invention a précisément pour but de fournir un dispositif présentant ces avantages.

On atteint ce but de l'invention, ainsi que d'autres qui apparaîtront à la lecture de la description qui va suivre, avec un dispositif de montage d'une boîte à fusibles dans un véhicule automobile comprenant une traverse de renforcement de sa structure passant sous la planche de bord du véhicule, ce dispositif étant remarquable en ce que le dispositif comprend des moyens de montage de ladite boîte à fusibles sur ladite traverse.

Les moyens de montage de la boîte sont ainsi, pour l'essentiel, constitués par une traverse préexistante, ce qui réduit considérablement le coût de ces moyens.

Suivant une autre caractéristique de la présente invention, les moyens de montage sont constitués par une bande métallique enserrant la boîte et fixée par une extrémité à la traverse.

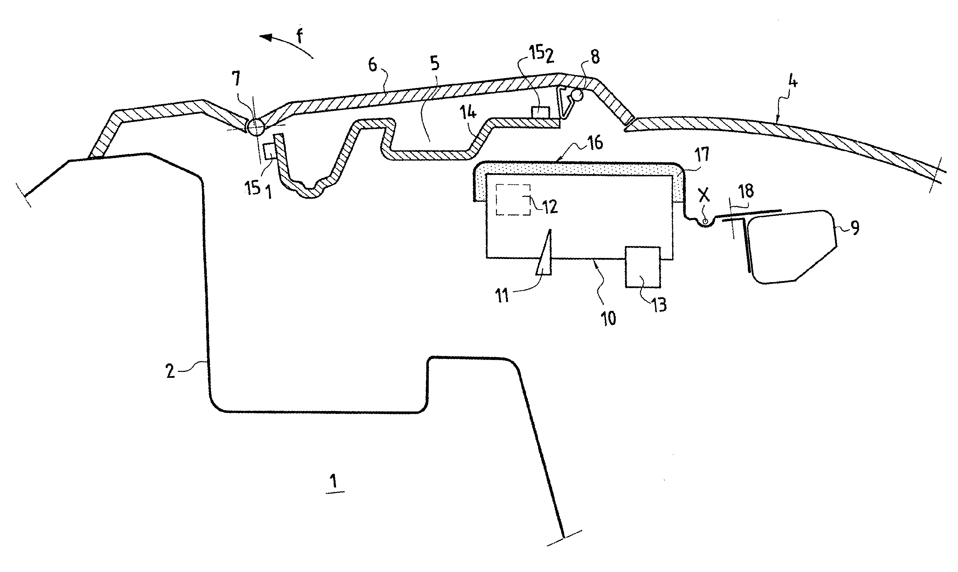

D'autres caractéristiques et avantages de la présente invention apparaîtront à la lecture de la description qui va suivre et à l'examen du dessin annexé dans lequel la figure unique représente schématiquement un mode de réalisation du dispositif suivant l'invention, en coupe par un plan vertical parallèle à l'axe longitudinal du véhicule.

Sur cette figure le compartiment moteur du véhicule est repéré 1. Il est séparé de l'habitacle du véhicule par une cloison pare-feu 2, éventuellement garnie d'un matériau insonorisant, non représenté.

La partie supérieure de la planche de bord 4 du véhicule est aussi représentée en coupe, au niveau où la coupe passe par une boîte à gants 5 accessible par un couvercle 6 articulé en 7 à son extrémité avant (dans le sens de progression normale du véhicule). Le couvercle est retenu en position de fermeture par un encliquetage 8 disposé à l'arrière de ce couvercle. Un ressort (non représenté) permet de maintenir temporairement le couvercle en position d'ouverture, après une rotation de ce couvercle dans le sens de la flèche f.

Une traverse 9 s'étend transversalement dans le véhicule, sous la partie supérieure de la planche de bord 4, pour supporter celle-ci et renforcer la structure du véhicule, et donc la sécurité des personnes se trouvant dans l'habitacle de celui-ci, comme cela est bien connu.

Comme cela est aussi bien connu, le véhicule comprend une boîte 10 dans laquelle sont réunis des fusibles, tel que celui référencé 11, de protection d'appareils électriques du véhicule, et éventuellement, des relais électriques ou électroniques tel celui schématisé en 12, de commande de ces appareils électriques. Un connecteur 13 raccorde la boîte 10 aux appareils protégés et/ou commandés.

L'utilisateur du véhicule doit pouvoir accéder commodément à cette boîte, notamment pour vérifier l'état des fusibles et remplacer éventuellement les fusibles consommés.

Pour ce but, selon l'invention, la boîte à fusibles 10 est accessible, à travers la boîte à gants 5, après ouverture du couvercle 6 de cette boîte et dégagement manuel d'un volet 14 mobile ou amovible délimitant une paroi de fond de la boîte 5, comme représenté.

A titre d'exemple illustratif et non limitatif seulement, le volet 14 peut être retenu par des encliquetages, schématisés en 15₁, 15₂, débrayables manuellement.

Bien entendu la boîte 10 doit être montée dans une position prédéterminée près du volet 14, pour pouvoir être facilement accessible, après retrait de ce volet, et éventuellement démontée pour une inspection.

A cet effet, le dispositif suivant l'invention comprend des moyens de montage 16 de la boîte 10, sur la traverse 9. A titre d'exemple illustratif et non limitatif, les moyens 16 représentés prennent la forme d'une bande métallique 16 conformée, à une extrémité, pour être fixée à la traverse 9 et, à l'autre extrémité, pour enserrer et pincer la boîte 10. C'est ainsi que cette extrémité peut prendre une forme en U représentée au dessin enveloppant trois faces de la boîte 10, avec, éventuellement, interposition d'une couche 17 d'un produit comblant un espace séparant la bande de la boîte, de type insonorisant par exemple.

L'extrémité opposée de la bande 16 peut être fixée à la traverse 9 par tout moyen tel que celui schématisé en 18 à la figure : vis, rivet, ou collier, soudure, etc...

Suivant une autre caractéristique, optionnelle, de la présente invention, la bande 16 présente entre la boîte 10 et la traverse 9, une partie conformée de manière à définir un axe X de rotation de la boîte 10, cet axe X étant perpendiculaire au plan de la figure. Une telle rotation facilite l'accès à la boîte 10 et son extraction. En cas de choc frontal du véhicule avec un obstacle, elle améliore la sécurité des passagers de l'habitacle, comme cela est expliqué plus complètement dans la demande de brevet français déposée ce jour par la demanderesse et intitulée "Habitacle de véhicule automobile équipé de moyens de protection contre les chocs".

Il apparaît maintenant que l'invention permet bien d'atteindre le but annoncé. En effet l'utilisation de la traverse 9 pour supporter la boîte 10 épargne la mise en place d'un support spécifique et réduit donc le coût d'installation de cette boîte.

Ceci d'autant plus que la boîte 10 peut être facilement installée sur la traverse 9 pendant la construction du véhicule, avant la pose de la partie supérieure 4 de la planche de bord, la traverse 9 étant alors d'accès bien dégagé.

Après la mise en service du véhicule, l'accès à la boîte 10 est particulièrement facile du fait que la proximité de la traverse 9 et de la partie supérieure de la planche de bord permet d'installer la boîte 10 en-dessous d'un fond amovible de la boîte à gants 5.

Bien entendu l'invention n'est pas limitée au mode de réalisation décrit et représenté qui n'a été donné qu'à titre d'exemple.

## Revendications

1. Dispositif de montage d'une boîte à fusibles (10) dans un véhicule automobile, ledit véhicule comprenant une traverse (9) de renforcement de sa structure passant sous la planche de bord (4) du véhicule, **caractérisé en ce que** ledit dispositif comprend des moyens de montage (16) de ladite boîte (10) à fusibles sur ladite traverse (9).

2. Dispositif conforme à la revendication 1, **caractérisé en ce que** lesdits moyens de montage (16) sont constitués par une bande métallique enserrant ladite boîte (10) et fixée par une extrémité à ladite traverse (9).

3. Dispositif conforme à la revendication 2, **caractérisé en ce que** ladite bande métallique (16) présente, entre ladite boîte (10) et ladite traverse (9), une partie conformée de manière à définir un axe de rotation (X) pour ladite boîte (10), en cas de choc sur celle-ci.

4. Dispositif conforme à l'une quelconque des revendications 1 à 3, **caractérisé en ce que** ladite boîte (10) est accessible à travers un volet (14) mobile ou amovible, délimitant une paroi de fond d'une boîte à gants (5) ménagée sous la surface supérieure de ladite planche de bord (4).

5. Dispositif conforme à l'une quelconque des revendications 1 à 4, **caractérisé en ce que** ladite boîte (10) comprend aussi des relais électriques ou électroniques (12)) de commande d'appareils du véhicule.
